# EUROPÄISCHE PATENTSCHRIFT

(11) **EP 1 926 905 B1**
(45) Veröffentlichungstag und Bekanntmachung des Hinweises auf die Patenterteilung: **19.04.2017**
(21) Anmeldenummer: 06762634.1
(22) Anmeldetag: 17.07.2006
(51) Int. Cl.: F02B 29/04

(54) **WÄRMETAUSCHERSYSTEM UND VERFAHREN ZUM BETREIBEN EINES DERARTIGEN WÄRMETAUSCHERSYSTEMS**
HEAT EXCHANGER SYSTEM AND METHOD FOR THE OPERATION THEREOF
SYSTEME D'ECHANGE THERMIQUE ET PROCEDE POUR FAIRE FONCTIONNER UN SYSTEME DE CE TYPE

(30) Priorität: 30.08.2005 DE 102005041147
(43) Veröffentlichungstag der Anmeldung: 04.06.2008
(73) Patentinhaber: MAHLE Behr GmbH & Co. KG, 70469 Stuttgart (DE)
(72) Erfinder: LUTZ, Rainer, 71711 Steinheim (DE); MÜLLER, Rolf, 71711 Steinheim (DE); PANTOW, Eberhard, 71364 Winnenden (DE)
(74) Vertreter: Grauel, Andreas
(86) Internationale Anmeldenummer: PCT/EP2006/006996
(87) Internationale Veröffentlichungsnummer: WO 2007/025607

(56) Entgegenhaltungen:
- EP-A1- 1 564 389
- EP-A2- 1 496 221
- WO-A-93/14306
- WO-A1-2004/090303
- DE-A1- 10 324 988
- DE-A1- 19 838 725
- DE-C- 463 919
- US-A1- 2003 114 978
- US-A1- 2004 244 782
- US-A1- 2005 000 473
- US-A1- 2005 021 218
- US-A1- 2005 028 796

## Beschreibung

Die Erfindung betrifft ein Wärmetauschersystem.

Zur Verringerung der Partikel- und Stickoxidemission bei Dieselmotoren ist die Rückführung von Abgas bekannt, wobei sowohl eine Hochdruck-Abgasrückführung als auch eine Niederdruck-Abgasrückführung möglich ist. Dabei wird der Abgasstrom auf Temperaturen von ca. 150°C bis 200°C abgekühlt und der Ansaugluft zugemischt. Als Kühlmedium im Abgaskühler wird in der Regel ein Teilstrom des Motor-Kühlmittels verwendet, jedoch ist auch die Verwendung anderer Kühlmittel bekannt. Die Abgasrückführung ist umso wirkungsvoller, je niedriger die Gasaustrittstemperaturen am Abgaskühler sind.

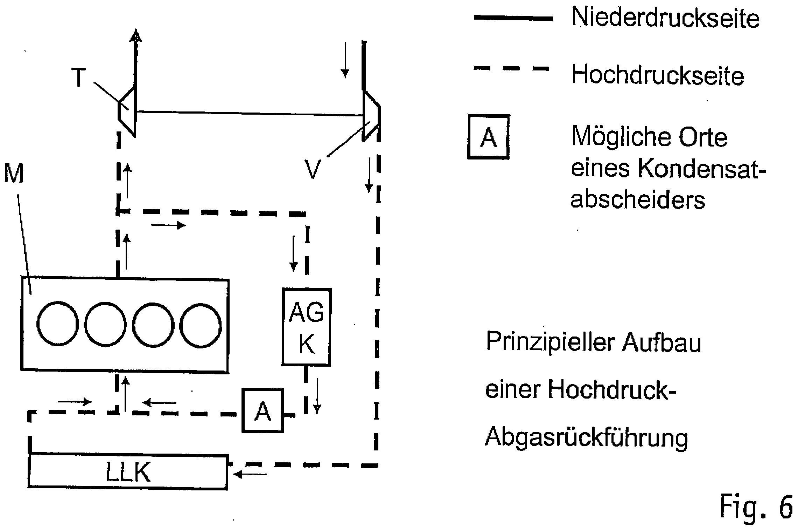

Bei der Hochdruck-Abgasrückführung wird üblicherweise Abgas vor der Turbine T entnommen und der Ladeluft nach dem Ladeluftkühler LLK zugeführt. Die Kühlung des rückgeführten Abgases erfolgt durch das heiße MotorKühlmittel, so dass auf Grund der hohen Temperaturen üblicherweise kein Abgaskondensat entsteht. Die Hochdruck-Abgasrückführung erreicht eine deutliche Verringerung der Stickoxidemission. Ein Schema einer Hochdruck-Abgasrückführung ist in Fig. 6 dargestellt.

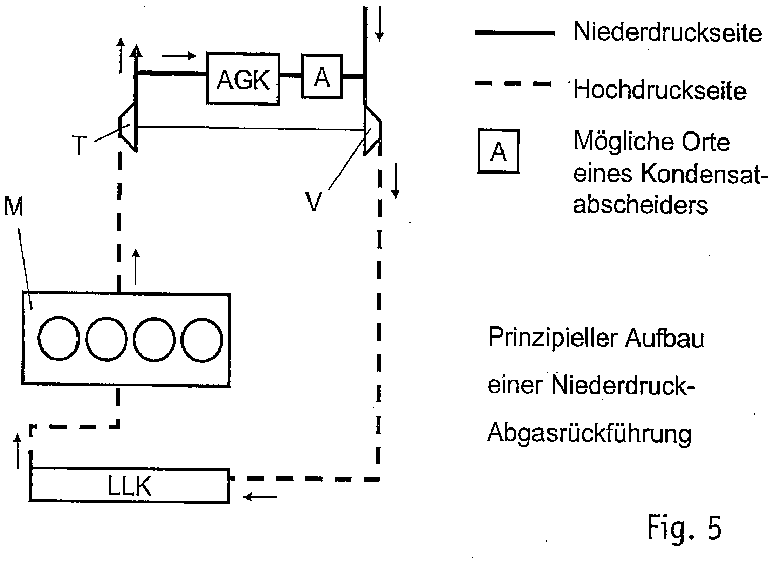

Bei der Niederdruck-Abgasrückführung wird das Abgas nach der Turbine, bevorzugt nach einem Partikelfilter, dem Abgasstrom entnommen, abgekühlt und dem Verdichter saugseitig zugeführt. Fig. 5 zeigt ein stark vereinfachtes Schema einer in dieser Form bekannten Turboladeranordnung mit einem Motor M (Dieselmotor), einer Turbine T (Abgasturbine), einem Abgaskühler AGK, einem Verdichter V (Turbolader) und einem Ladeluftkühler LLK, wobei es sich vorliegend um einen Turbolader mit Niederdruck-Abgasrückführung handelt. Dabei ist die Niederdruckseite mit durchgezogenen Linien, die Hochdruckseite mit gestrichelten Linien dargestellt, wie auch in Fig. 6 für die Hochdruck-Abgasrückführung.

Vom Verdichter V angesaugte Luft aus der Umgebung und rückgeführtes Abgas vom Motor M werden als Ladeluft in dem Verdichter V verdichtet, wodurch die Ladeluft erwärmt wird. Anschließend wird die Ladeluft im Ladeluftkühler LLK abgekühlt. Vorliegend ist ein einfacher, luftgekühlter Ladeluftkühler LLK vorgesehen, jedoch kann die Abkühlung auch mehrstufig und/oder mit Hilfe eines Kühlkreislaufs, bspw. mittels eines Teilstroms des Motorkühlkreislaufs oder eines getrennt ausgebildeten Niedertemperatur-Kühlkreislaufs, erfolgen. Die gekühlte Ladeluft wird danach dem Motor M zugeführt, wo sie der Verbrennung des Treibstoffes dient.

Das in Folge der Verbrennung erzeugte, vom Motor M kommende, heiße und unter hohem Druck stehende Abgas durchströmt die Turbine T, welche auf bekannte Weise mit dem Verdichter V gekoppelt ist, und wird entspannt, wodurch es sich etwas abkühlt. Je nach Bedarf wird Abgas vom durch den Auspuff nach außen abgeführten Abgasstrom abgezweigt und durch den Abgaskühler AGK geführt, in welchem es weiter abgekühlt wird. Dem Abgaskühler AGK nachgeordnet oder in denselben integriert kann ein Kondensatabscheider angeordnet sein, welcher Kondensat, das in Folge einer gemäß der vorliegenden Erfindung unerwünscht starken Abkühlung des Abgasstroms anfällt sammelt. Anschließend wird es der angesaugten Frischluft zugeführt und gelangt gemeinsam mit derselben wiederum zum Verdichter V. In Fig. 5 ist die Strömungsrichtung des Ladeluft- bzw. Abgasstroms durch Pfeile angedeutet.

Für die Kühlung des Abgaskühlers AGK wird üblicherweise Kühlmittel vom Motorkühlkreislauf verwendet. Auf Grund der stärkeren Abkühlung des zurückgeführten Abgases ist eine weitere Verminderung der Stickoxidemission möglich, jedoch kann sich auf Grund der starken Abkühlung des rückgeführten Abgases Kondensat bilden, welches stark sauer ist. Werden bei der Niederdruck-Abgasrückführung Kondensattröpfchen dem Verdichter zugeführt, so können diese zudem den Verdichter wegen dessen hoher Drehzahl (ca. 120000 bis 150000 U/min) beschädigen.

Bei Nutzfahrzeugen ist neben der Abgasrückführung zur Verringerung der Stickoxidemission auch das SCR Verfahren (Selective Catalytic Reduction) bekannt, bei dem entweder aus Ammonium-Carbamat oder wässriger Harnstofflösung Ammoniak erzeugt wird, welches das vom Motor erzeugte Stickoxid in die unschädlichen Komponenten Stickstoff und Wasser katalytisch umwandelt. Dieses Verfahren hat jedoch den Nachteil, dass ein zusätzlicher Betriebsstoff im Fahrzeug mitgeführt werden muss. Zudem laufen die chemischen Reaktionen erst bei Temperaturen von über 200°C ab, die jedoch bei realen Betriebsbedingungen teilweise auch für größere Zeitspannen deutlich unterschritten werden.

Femer sind NOₓ-Speicherkatalysatoren bekannt, die allerdings derzeit aus Kostengründen nur bedingt wettbewerbsfähig sind. Zudem müssen die Katalysatoren in bestimmten Intervallen regeneriert werden, wofür zusätzlicher Kraftstoff erforderlich ist.

Ebenfalls ist aus der DE 297 22 813 U1 eine Abgasrückführungseinrichtung für einen Verbrennungsmotor eines Kraftfahrzeugs bekannt, mit einer von einer Abgasleitung abzweigenden und zur Luftzuführung des Verbrennungsmotors führenden Abgasrückführleitung, in welcher ein Abgasrückführventil und ein Abgaskühler angeordnet sind, der an einen Kreislauf für ein Motorkühlmittel angeschlossen ist. Hierbei ist in der Verbindung zwischen dem Abgaskühler und dem Kreislauf des Motorkühlmittels ein thermostatisches Ventil angeordnet, das bis zu einer vorgegebenen, oberhalb der Umgebungstemperatur liegenden Mindesttemperatur des Kühlmittels eine Durchströmung des Abgaskühlers sperrt, so dass sichergestellt wird, dass nicht auf Grund einer Kühlmittelströmung in den Abgaskühler das Erreichen der Betriebstemperatur des Verbrennungsmotors verzögert wird, bei welcher der Motor bezüglich Verbrauch und Emission günstiger arbeitet als im kalten Zustand. Dabei kann das thermostatische Ventil zwei hintereinander geschaltete thermostatische Arbeitselemente enthalten, von welchem eines ein auf die Öffnungstemperatur und die Regeltemperaturen des Kühlmittels eingestelltes Betriebsarbeitselement und das andere als ein auf eine oberhalb des Regeltemperaturbereichs liegende Temperatur eingestelltes Sicherheitsarbeitselement ausgelegt ist. Das Sicherheitsarbeitselement sorgt hierbei dafür, dass auch bei Ausfall des Betriebsarbeitselements eine Kühlmittelströmung in dem Abgaskühler vorhanden ist.

Eine Beschädigung eines Verdichterlaufrades durch Tropfenschlag kann auch bei einer zweistufigen Verdichtung von Ladeluft mit zwischengeschalteter Kühlung auftreten.

Die US 2005/0000473 A! offenbart ein Wärmetauschersystem mit einem ersten Kühlkreislauf und mit einem zweiten Kühlkreislauf, die über Verbindungsmittel miteinander verbunden.

Ausgehend von diesem Stand der Technik ist es Aufgabe der Erfindung, ein verbessertes Wärmetauschersystem, insbesondere für Abgaswärmetauscher und/oder Ladeluftkühler, zur Verfügung zu stellen.

Diese Aufgabe wird gelöst durch ein Wärmetauschersystem mit den Merkmalen des Anspruchs 1. Vorteilhafte Ausgestaltungen sind Gegenstand der Unteransprüche.

Erfindungsgemäß ist ein Wärmetauschersystem mit einem über einen Motorkühlkreislauf gekühlten Verbrennungsmotor, dem rückgeführtes Abgas als ein Medium zugeführt werden kann, wobei das Wärmetauschersystem mindestens einen Abgaswärmetauscher als Wärmetauscher zur Kühlung des Mediums mittels eines Kühlmittels aufweist, wobei das Wärmetauschersystem mindestens einen Temperaturregler zur Regelung der Temperatur des dem Wärmetauscher zugeführten Kühlmittels aufweist, der die Kühlmitteleintritts-temperatur in den Wärmetauscher nach unten auf eine Temperatur oberhalb des Taupunkts des gekühlten Mediums begrenzt, wobei der Wärmetauscher Teil eines Niedertemperatur-Kühlkreislaufs ist und der Temperaturregler ein Ventil aufweist, wobei das Ventil im Normalbetrieb den Zufluss von heißem Motorkühlmittel verhindert, so dass ausschließlich oder nahezu ausschließlich warmes Kühlmittel vom Niedertemperatur-Kühlkreislauf durch den Wärmetauscher strömt, und welches bei kaltem Motor den Zufluss von kaltem Kühlmittel aus dem Motorkühlkreislauf und kaltem Kühlmittel aus dem Niedertemperatur-Kühlkreislauf verhindert, so dass kein oder nahezu kein Kühlmittel durch den Wärmetauscher strömt, und welches bei warmem Kühlmittel im Motorkühlkreislauf und kaltem Kühlmittel im Niedertemperatur-Kühlkreislauf öffnet, so dass warmes Kühlmittel aus dem Motorkühlkreislauf dem kalten Kühlmittel im Niedertemperatur-Kühlkreislauf beigemischt wird, bevor es durch den Wärmetauscher strömt.

Dabei weist das Wärmetauschersystem mindestens einen Temperaturregler auf, der die Temperatur mindestens einer von mindestens einem zu kühlenden Medium oder von mindestens einer Kühlmittel überströmten Oberfläche des Wärmetauschers, insbesondere des Abgaswärmetauschers und/oder Ladeluftkühlers, und/oder die Kühlmitteleintrittstemperatur in den Wärmetauscher, insbesondere in den Abgaswärmetauscher und/oder Ladeluftkühler, und/oder die Austrittstemperatur des zu kühlenden Mediums, insbesondere des Abgases und/oder der Ladeluft, und/oder die Eintrittstemperatur des zumindest teilweise gekühlten Mediums, insbesondere des Abgases und/oder der Ladeluft, in einen nachfolgend angeordneten Verdichter nach unten begrenzt. Vorzugsweise kommt das Wärmetauschersystem in Verbindung mit einer Turboladeranordnung eines Kraftfahrzeugs zum Einsatz, jedoch muss nicht notwendigerweise ein Turbolader in dem System vorgesehen sein. Die Wärmetauscher sind insbesondere als Abgaswärmetauscher ausgebildet. In einer weiteren Ausführung ist der Wärmetauscher insbesondere als Ladeluftkühler ausgebildet. Hierbei kann der Ladeluft natürlich auch rückgeführtes Abgas beigemischt werden. In weiteren Ausführungen ist der Wärmetauscher insbesondere als Ölkühler ausgebildet. Hierbei ist bevorzugt, jedoch nicht notwendigerweise, dem Wärmetauscher ein Verdichter nachgeordnet, der vor einer Beschädigung durch Tropfen geschützt werden soll.

Die Begrenzung der Temperatur nach unten erfolgt erfindungsgemäß auf eine Temperatur oberhalb des Taupunkts des zu kühlenden Mediums, insbesondere des Abgases und/oder der Ladeluft. Durch die Temperaturbegrenzung nach unten können niedrige Oberflächentemperaturen im Wärmetauscher, insbesondere im Abgaswärmetauscher oder im Ladeluftkühler, vermieden werden, so dass keine Kondensatbildung an kalten Oberflächen erfolgen kann. Dies schützt zum einen den Abgastauscher und/oder den Ladeluftkühler und zum anderen die nachfolgenden Bereiche, also insbesondere im Falle einer Niederdruck-Abgasrückführung den Verdichter, der durch auftreffende Kondensattröpfchen beschädigt werden kann.

Die Regelung der Oberflächentemperatur des Wärmetauschers, insbesondere des Abgaswärmetauschers erfolgt bevorzugt durch eine Regelung der Temperatur des dem Wärmetauschers, insbesondere dem Abgaswärmetauscher zugeführten Kühlmittels, wobei die Kühlmitteltemperatur bevorzugt oberhalb der Temperatur des Taupunktes des zu kühlenden Mediums, insbesondere des Abgas-Taupunkts, gehalten wird, so dass ein Unterschreiten des Taupunkts sicher vermieden werden kann und so die Kondensation von Wasser und Säuren, die im zu kühlenden Medium, insbesondere im Abgas enthalten sind, verhindert wird. Die Regelung kann insbesondere in Abhängigkeit von einer Temperaturmessung der Kühlmitteleintrittstemperatur in den Wärmetauscher, insbesondere in den Abgaswärmetauscher und/oder der Austrittstemperatur des zu kühlenden Mediums, insbesondere der Abgasaustrittstemperatur, aus dem Wärmetauscher, insbesondere aus dem Abgaswärmetauscher, mittels eines oder mehrerer Sensoren erfolgen.

Die Regelung kann auf einen festen unteren Grenzwert eingestellt sein. Prinzipiell ist auch eine auf den aktuellen Betriebspunkt, insbesondere den Druck des zu kühlenden Mediums, insbesondere den Abgasdruck und/oder dem Ladeluftdruck, und die enthaltene Feuchtigkeit, und den damit verbundenen Taupunkt bezogene Regelung möglich, welche aber deutlich aufwändiger dafür aber wirkungsgradoptimierter ist.

Als günstig hat sich eine Kühlmittel-Eintrittstemperatur in den Wärmetauscher, insbesondere in den Abgaswärmetauscher und/oder Ladeluft-Zwischenkühler, von ca. 50°C, insbesondere von unter 60°C, erwiesen. Bei der sich durch diese untere Grenztemperatur des Kühlmittels, die ggf. auch bis zu 70°C betragen kann, ergebenden Oberflächentemperaturen im Wärmetauscher, insbesondere im Abgaswärmetauscher und/oder Ladeluft-Zwischenkühler, kann die Kondensatbildung im Wärmetauscher, insbesondere im Abgaswärmetauscher und/oder im Ladeluft-Zwischenkühler, relativ sicher in allen Betriebszuständen, bei denen ausreichend Kühlmittel zur Verfügung steht, verhindert werden, wobei gleichzeitig, insbesondere bei einer Kühlmitteltemperatur in der Nähe der unteren Grenztemperatur eine ausreichende Kühlleistung vorhanden ist, so dass sich - verglichen mit herkömmlichen Wärmetauschern, insbesondere Abgaswärmetauschern und/oder Ladeluft-Zwischenkühlern, - nur ein relativ geringer Wirkungsgradverlust bei deutlich längerer Lebensdauer des Wärmetauschers, insbesondere des Abgaswärmetauschers und/oder Ladeluft-Zwischenkühlers, und des nachfolgenden Verdichters ergibt.

Das Unterschreiten der unteren Grenztemperatur kann sowohl durch die Regelung der Temperatur des dem Wärmetauschers, insbesondere dem Abgaswärmetauscher und/oder Ladeluft-Zwischenkühler, zugeführten Kühlmittels als auch durch die Regelung der Kühlmittelmenge verhindert werden. So kann, wenn das Kühlmittel zu kalt ist, die Temperaturregelung, d.h. die Temperaturbegrenzung nach unten, mit Hilfe einer verringerten Kühlmittelmenge erfolgen, welche den Wärmetauscher, insbesondere den Abgaswärmetauscher und/oder Ladeluft-Zwischenkühler, durchströmt. Im Extremfall ist kein Durchfluss vorgesehen, bis die Temperatur des Kühlmittels die untere Grenztemperatur überschreitet.

Der Temperaturregler ist bevorzugt direkt in den Wärmetauscher, insbesondere in den Abgaswärmetauscher und/oder Ladeluft-Zwischenkühler, integriert ausgebildet, wodurch eine sehr genaue Regelung ermöglicht wird. Hierfür kann als Regelorgan insbesondere ein Dehnstoffelement dienen, jedoch sind auch andere Systeme möglich, insbesondere elektrisch und/oder pneumatisch betätigte Regelorgane.

Der Wärmetauscher, insbesondere der Abgaswärmetauscher und/oder Ladeluft-Zwischenkühler, ist vorzugsweise Teil eines Niedertemperatur-Kühlkreislaufs. Dabei ist der Niedertemperatur-Kühlkreislauf, in welchem der Wärmetauscher, insbesondere der Abgaswärmetauscher und/oder Ladeluft-Zwischenkühler, angeordnet ist, und der Motorkühlkreislauf vorzugsweise miteinander verbindbar ausgebildet, so dass bei bestimmten Betriebszuständen, in denen das Kühlmittel des Niedertemperatur-Kühlkreislaufs zu kalt ist, das Kühlmittel des Motorkühlkreislaufs aber bereits eine ausreichende Temperatur aufweist, Kühlmittel vom Motorkühlkreislauf (mit) für die Abgaskühlung und/oder Ladeluftkühlung verwendet werden kann.

Überschreitet die Temperatur des Kühlmittels aus dem Motorkühlkreislauf einen oberen Grenzwert, der vorzugsweise zwischen 60°C und 70°C, insbesondere ca. 65°C beträgt, so wird vorzugsweise nur noch das Kühlmittel des Niedertemperatur-Kühlkreislaufs verwendet, wobei jedoch eine gewisse Leckage von Kühlmittel aus dem Motorkühlkreislauf möglich ist, die jedoch vorzugsweise unter 30%, insbesondere unter 10% des Gesamtkühlmitteldurchflusses des Wärmetauschers, insbesondere des Abgaswärmetauschers und/oder Ladeluft-Zwischenkühlers, beträgt.

Vorzugsweise ist ein Kühlmittelausgleichsbehälter zwischen dem Niedertemperatur-Kühlkreislauf und dem Motorkühlkreislauf vorgesehen, über welchen Kühlmittel vom Niedertemperatur-Kühlkreislauf bei Bedarf zum Motorkühlkreislauf gelangen kann und der als Zwischenspeicher dient.

Das Wärmetauschersystem weist bevorzugt genau zwei Wärmetauscher, insbesondere zwei Abgaswärmetauscher auf, wobei der erste Wärmetauscher, insbesondere der erste Abgaswärmetauscher, im Motorkühlkreislauf und der zweite Wärmetauscher, insbesondere der zweite Abgaswärmetauscher, in einem Teil des Niedertemperatur-Kühlkreislaufs angeordnet sind.

Dabei ist - in Strömungsrichtung des zu kühlenden Mediums, insbesondere des Abgases, gesehen - bevorzugt der dem Motorkühlkreislauf zugeordnete, erste Wärmetauscher, insbesondere erste Abgaswärmetauscher, vor dem, einem dritten Wärmetauscher, insbesondere einem Ladeluftkühler, zugeordneten, zweiten Wärmetauscher, insbesondere zweiten Abgaswärmetauscher, angeordnet. Insbesondere der zweite Wärmetauscher, insbesondere zweite Abgaswärmetauscher, wird bevorzugt im Gegenstrombetrieb durchströmt. Der erste Wärmetauscher, insbesondere der erste Abgaswärmetauscher, wird bevorzugt im Gleichstrombetrieb durchströmt. Durch die zweistufige Kühlung, insbesondere durch die zweistufige Abgaskühlung, wird insbesondere die maximale Kühlleistung verbessert.

Das Wärmetauschersystem kann auch eine regelbare Drossel am Wärmetauscher, insbesondere am Abgaswärmetauscher, aufweisen, so dass die Kühlmittelmenge, die durch den Wärmetauscher, insbesondere Abgaswärmetauscher strömt, bedarfsgerecht verringert werden kann.

Ferner kann das Wärmetauschersystem für ggf. doch bei bestimmten Betriebszuständen, insbesondere beim Anfahren bei extrem niedrigen Außentemperaturen, anfallendes Kondensat einen oder mehrere Kondensatabscheider aufweisen. Durch den Kondensatabscheider kann der sich in dem Kondensat, welches sich bei Erreichen und Unterschreiten der Temperatur des Taupunkts bildet, befindliche korrosive Anteil des Abgases aus dem Abgasstrom oder dem Ladeluftstrom entfernt und sichergestellt werden, dass im folgenden Bereich sich kein oder nur minimal Kondensat sammelt, welches eine gegebenenfalls stattfindende Korrosion der Bauteile fördert. Der Kondensatabscheider ist hierbei bevorzugt direkt nach dem Kühler zur Kühlung insbesondere des rückgeführten Abgases und/oder nach dem dritten Wärmetauscher, insbesondere nach dem Ladeluftkühler, angeordnet. Um den Verdichter vor Beschädigungen durch Kondensattröpfchen zu schützen, ist auch eine Anordnung direkt vor dem Verdichter sinnvoll. Hierbei kann die Welle des Verdichters vorteilhafterweise als Antrieb oder Teil eines Fliehkraftabscheiders verwendet werden. Auf Grund des mit einem Kondensatabscheider verbundenen Druckverlust im Strom des zu kühlenden Mediums, insbesondere im Abgas- oder Ladeluftstrom, ist das Vorsehen eines solchen nur bei entsprechenden Rahmenbedingungen, wie insbesondere Betrieb in Zonen mit extrem niedrigen Temperaturen, sinnvoll. Um das in einem Kondensatabscheider ggf. anfallende Kondensat umweltfreundlich zu entsorgen, kann eine thermische Kondensatentsorgung vorgesehen sein, welche eine Entgiftung des Kondensats ermöglicht, so dass die im Kondensat enthaltenen Säuren, insbesondere die Salpetersäure, die Schwefelsäure und die schwefelige Säure, in deren ungefährliche Gase und Wasser umgewandelt werden. Diese können anschließend dem Abgas beigegeben und an die Umgebung über den Auspuff abgegeben werden. Beim Kondensatabscheider kann es sich um einen Fliehkraft- oder Zyklonabscheider handeln. Alternativ ist auch die Verwendung eines anderen Turbulenzerzeugers möglich, welcher in einem Luftstrom befindliche Kondensattröpfchen nach außen fördert, so dass sie abgeführt werden können. Beliebige andere gleichwirkende Vorrichtungen sind ebenfalls möglich. Ferner ist die Verwendung eines Filters, beispielsweise aus Edelstahl- oder aus Kunststoffgewebe bzw. -vlies, der als Kondensatabscheider dient, möglich. In allen Fällen kann die Kondensatabscheidung zur Erhöhung der Effektivität mehrstufig erfolgen. Dabei können auch unterschiedliche Kondensatabscheider beliebig miteinander kombiniert werden. Der Kondensatabscheider ist bevorzugt direkt nach dem Wärmetauscher, insbesondere bevorzugt direkt nach dem Abgaskühler und/oder Ladeluft-Zwischenkühler, angeordnet. Ebenfalls ist eine Anordnung nach dem Ladeluftkühler sinnvoll.

Im Folgenden wird ein erfindungsgemäßes Wärmetauschersystem, insbesondere zur Abgaskühlung, anhand zweier Ausführungsbeispiele mit Varianten, teilweise unter Bezugnahme auf die Zeichnung, im Einzelnen erläutert. Es zeigen:
- Fig. 1: ein Schema eines erfindungsgemäßen Wärmetauschersystems gemäß dem Ausführungsbeispiel,
- Fig. 2: eine schematische Darstellung des zwischen dem Motorkühlkreislauf und dem Niedertemperatur-Kühlkreislauf angeordneten Thermostat-Ventils in der Drosselstellung,
- Fig. 3: das Thermostat-Ventil von Fig. 2 in der Mischstellung,
- Fig. 4: das Thermostat-Ventil von Fig. 2 in der Kühlstellung,
- Fig. 5: ein Schema einer Niederdruck-Abgasrückführung,
- Fig. 6: ein Schema einer Hochdruck-Abgasrückführung, und
- Fig. 7: eine schematische Darstellung einer zweistufigen Aufladung von aus der Umgebung angesaugter Frischluft mit einem Zwischenkühler gemäß dem zweiten Ausführungsbeispiel.

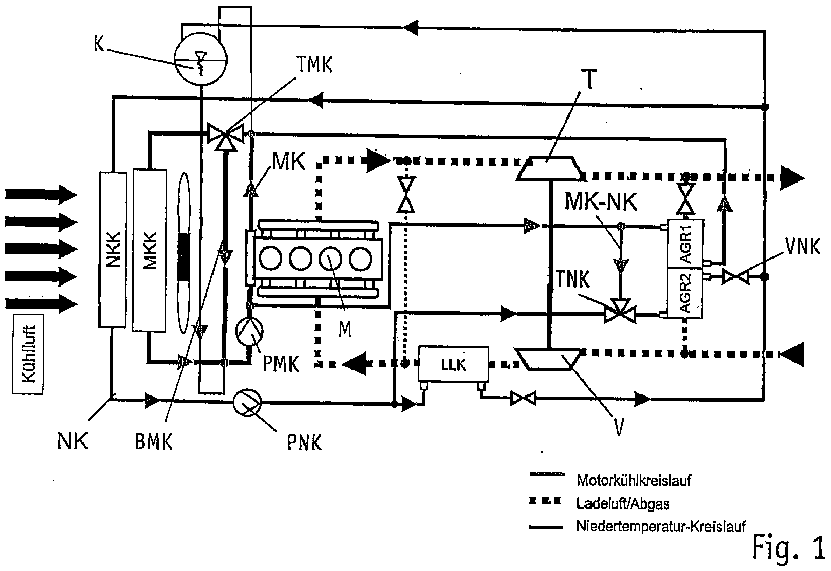

Im Folgenden wird das in Fig. 1 dargestellte Wärmetauschersystem, insbesondere zur Abgaskühlung, mit einem über einen Motorkühlkreislauf MK gekühlten Verbrennungsmotor M, dem Ladeluft und/oder rückgeführtes Abgas zugeführt werden kann, näher erläutert. Bezüglich des Prinzips der Abgasrückführung und -kühlung wird auf die Beschreibung von Fig. 5 verwiesen. Im Unterschied zur Darstellung von Fig. 5 sind jedoch vorliegend zwei Wärmetauscher AGK1 und AGK2, insbesondere Abgaswärmetauscher und/oder Ladeluftkühler, zur Kühlung des rückgeführten Abgases vorgesehen. Der erste Wärmetauscher, insbesondere Abgaswärmetauscher, AGK1, der in Strömungsrichtung des rückgeführten Abgases vor dem zweiten Wärmetauscher, insbesondere Abgaskühler, AGK2 angeordnet ist, wird mit Hilfe von Kühlmittel aus dem Motorkühlkreislauf MK gekühlt, während der zweite Wärmetauscher, insbesondere Abgaswärmetauscher, AGK2 von Kühlmittel aus einem Niedertemperatur-Kühlkreislauf, ggf. unter Beimischung von Kühlmittel aus dem Motorkühlkreislauf MK gekühlt wird.

Der Motor M wird, wie zuvor erwähnt, vom Motorkühlkreislauf MK, in welchem ein Kühlmittel strömt, gekühlt. Hierin wird das im Motor-Kühlmittelkühler MKK abgekühlte Kühlmittel dem Motor M über eine Pumpe PMK zugeführt. Die Regelung der Kühlleistung erfolgt durch einen Bypass-Thermostat TMK auf an sich bekannte Weise, wobei bei ausreichend kaltem Kühlmittel oder sehr hohem Durchflussbedarf auch Kühlmittel durch einen Bypass BMK vorbei am Motor-Kühlmütelkühler MKK strömen kann.

Zur Kühlung des ersten Wärmetauschers, insbesondere eines Abgaswärmetauschers, AGK1 ist ferner ein Zweig des Motorkühlkreislaufs MK vorgesehen. Das Kühlmittel wird, um in den Zweig zu gelangen, von der Druckseite der Pumpe PMK vor dem Motor M abgezweigt und strömt anschließend direkt zum kühlmittelgekühlten Wärmetauscher, insbesondere Abgaswärmetauscher, AGK1, wo es der geregelten Kühlung des rückgeführten Abgases dient. Anschließend wird das Kühlmittel am Motoraustritt vor dem Bypass-Thermostat TMK wieder dem Kühlmittelstrom zugemischt. Dabei kann durch einen Temperaturregler (nicht dargestellt), der in den Wärmetauscher, insbesondere Abgaswärmetauscher, AGK1 integriert ist und die Durchflussmenge im Abzweig des Motorkühlkreislauf MK regelt, sichergestellt werden, dass die Kühlmitteltemperatur am Wärmetauscher, insbesondere Abgaswärmetauscher, AGK1 nicht unter dem Taupunkt des rückgeführten Abgases liegt. Vorliegend ist eine vereinfachte Regelung in Form einer Temperaturbegrenzung nach unten auf 50°C vorgesehen.

Bei dem in Fig. 1 dargestellten Ausführungsbeispiel handelt es sich beim Ladeluftkühler LLK um einen indirekten Ladeluftkühler, der im Gegensatz zu einem luftgekühlten Ladeluftkühler nicht durch Luft, sondern durch ein Kühlmittel gekühlt wird, welches in einem Niedertemperatur-Kühlkreislauf NK, umgewälzt von einer zweiten Pumpe PNK, strömt. Das Kühlmittel des Niedertemperatur-Kühlkreislaufs NK strömt von der zweiten Pumpe PNK zum Ladeluftkühler LLK, in welchem es Wärme aufnimmt. Zwischen Pumpe PNK und Ladeluftkühler LLK ist eine Verzweigung vorgesehen, an welcher ein Teil des Kühlmittels abgezweigt und dem zweiten Wärmetauscher, insbesondere Abgaswärmetauscher, AGK2 zugeführt werden kann.

Die Regelung erfolgt mittels zweier Ventile TNK und VNK auf an später näher beschriebene Weise, wobei das erste Ventil TNK, wobei es sich um ein Thermostatventil handelt, vor dem zweiten Wärmetauscher, insbesondere Abgaswärmetauscher, AGK2 und das zweite Ventil VNK nach dem zweiten Wärmetauscher, insbesondere Abgaswärmetauscher, AGK2 angeordnet ist. Nach dem zweiten Wärmetauscher, insbesondere Abgaswärmetauscher, AGK2 wird das erwärmte Kühlmittel dem Kühlmittel, das den Ladeluftkühler LLK durchströmt hat, wieder zugeführt. In Strömungsrichtung des rückgeführten Abgases gesehen ist der zweite Wärmetauscher, insbesondere der zweite Abgaswärmetauscher, AGK2 hinter dem ersten Wärmetauscher, insbesondere dem ersten Abgaswärmetauscher, AGK1 angeordnet, wobei gemäß der Darstellung von Fig. 1 der zweite Wärmetauscher, insbesondere der zweite Abgaswärmetauscher, AGK2 im Gegenstrombetrieb und der ersten Wärmetauscher, insbesondere der erste Abgaswärmetauscher, AGK1 im Gleichstrombetrieb durchströmt wird. Das Kühlmittel gelangt anschließend zum luftgekühlten Niedertemperatur-Kühlmittelkühler NKK, der in Luftströmungsrichtung gesehen vor dem Motor-Kühlmittelkühler MKK angeordnet ist, und wiederum zur zweiten Pumpe PNK.

Um sicherzustellen, dass in den Wärmetauschern, insbesondere den Abgaswärmetauschern, AGK1 und AGK2, insbesondere im zweiten Wärmetauscher, insbesondere im zweiten Abgaswärmetauscher, AGK2, kein Kondensat anfällt, welches den nachfolgenden Verdichter V beschädigen könnte, erfolgt eine Regelung der Temperatur des dem zweiten Wärmetauschers, insbesondere des zweiten Abgaswärmetauschers, AGK2 zugeführten Kühlmittels, wobei eine Kühlmitteltemperatur von 50°C und somit der Taupunkt nicht unterschritten wird.

Hierfür ist eine Verbindungsleitung MK-NK vorgesehen. Durch diese kann bei Bedarf und bei Vorliegen einer ausreichend hohen Temperatur des Motorkühlmittels, nämliche eine Motorkühlmittel-Temperatur, die oberhalb der Temperatur des Niedertemperatur-Kühlkreislaufs NK und der unteren Grenztemperatur (vorliegend 50°C) liegt, warmes Motorkühlmittel vom Abzweig des Motorkühlkreislaufs MK, bevor das Motorkühlmittel zum ersten Wärmetauscher, insbesondere zum ersten Abgaswärmetauscher, AGK1 gelangt, dem kühleren Kühlmittel des Niedertemperatur-Kühlkreislauf NK beigemischt werden, so dass die Kühlmitteltemperatur im zweiten Wärmetauscher, insbesondere im zweiten Abgaswärmetauscher, AGK2 erhöht wird.

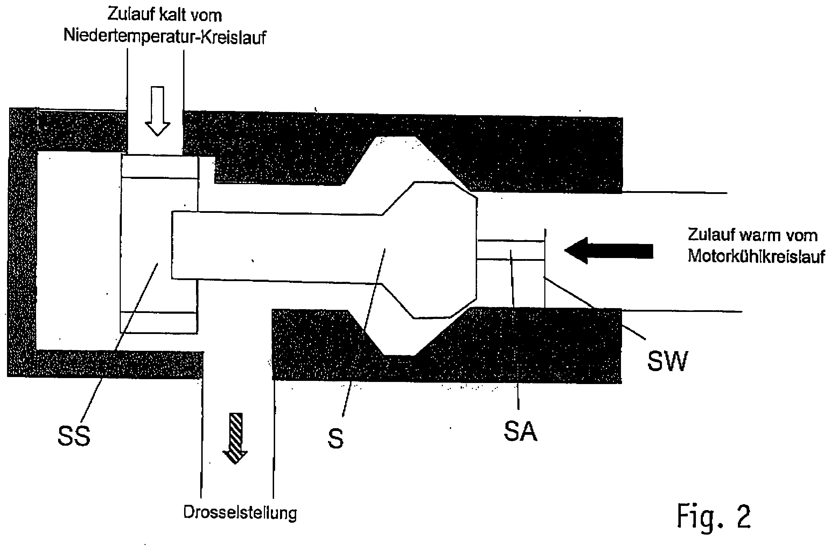

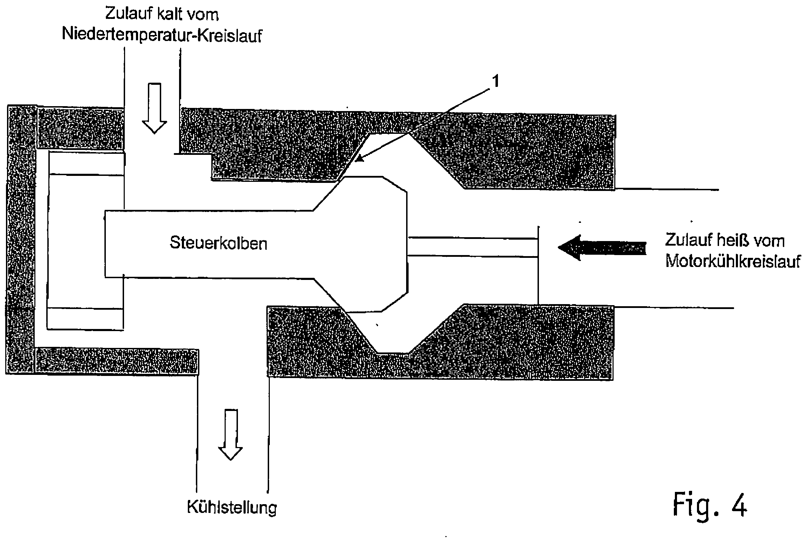

Die Regelung des Kühlmittel-Mischungsverhältnisses erfolgt mit Hilfe des Ventils TNK, wobei als Regelorgan gemäß dem vorliegenden Ausführungsbeispiel ein mit Wachs gefülltes Dehnstoffelement mit Steuerkolben S dient, der mit einem an seinem einen Ende angebrachten Schieber SS den freien Durchströmquerschnitt des vom Niedertemperatur-Kühlkreislaufs NK kommenden Kühlmittels und mit seinem anderen Ende den freien Strömungsquerschnitt des vom Motorkühlkreislauf MK kommenden Kühlmittels ganz oder teilweise verschließt oder freigibt. Das Ventil TNK ist in den Figuren 2 bis 4 in verschiedenen Stellungen dargestellt. Die Regelung erfolgt vorliegend über die Kühlmitteleintrittstemperatur. Beim Sensor handelt es sich vorliegend um ein Dehnstoffelement, wobei sich der Dehnstoff über einen Arbeitskolben SA an einem Widerlager SW abstützt und somit den Steuerkolben S in seiner Längsrichtung entsprechend der Temperatur im Bereich des Dehnstoffs verschiebt. Alternativ können auch andere, gleichwirkende Elemente verwendet werden, wie beispielsweise ein beheizbares Dehnstoffelement, ein pneumatisch oder ein elektrischer Aktuator. Ebenfalls können auch andere Ventile verwendet werden, wie insbesondere Teller-, Doppel-Teller- oder Ringschieberventile. Dabei kann an Stelle der baulichen Integration des Sensors dieser auch als getrenntes Bauteil am Kühlmittelzulauf des zweiten Wärmetauschers, insbesondere des zweiten Abgaswärmetauschers, AGR2 vorgesehen sein. Ebenso kann die Drosselfunktion des Thermostat-Ventils TNK für den Motorwarmlauf durch ein separates Drosselthermostat im Kühlmittelvor- oder -rücklauf des zweiten Abgaskühlers AGR2 dargestellt sein. In diesem Fall kann die Ausbildung des Zulaufquerschnitts für den Motorkühlkreislauf MK im Regler als Drosselstelle entfallen. Alternativ oder zusätzlich kann auch die Abgasaustrittstemperatur aus dem zweiten Wärmetauscher, insbesondere aus dem zweiten Abgaswärmetauscher, AGK2 für die Regelung verwendet werden.

Die Regelung des Thermostat-Ventils TNK erfolgt folgendermaßen: Liegt, beispielsweise bei einem Kaltstart des Motors, die Motorkühlmitteltemperatur und die Niedertemperatur-Kühlkreislauf-Kühlmitteltemperatur unter 50°C, so verschließt das Ventil TNK durch entsprechende Positionierung des Steuerkolbens den Strömungsweg des vom Niedertemperatur-Kühlkreislauf NK kommenden Kühlmittels vollständig. Der Strömungsweg des vom Motorkühlkreislauf MK kommenden Kühlmittels wird nahezu vollständig verschlossen (bis auf eine geringe Leckagemenge, d.h. vorzugsweise 10-30% des Kühlmittelstroms bei vollständiger Öffnung), wie in Fig. 2 dargestellt. Durch den stark reduzierten Kühlmitteldurchfluss im zweiten Wärmetauscher, Insbesondere im zweiten Abgaswärmetauscher, AGK2 verschlechtert sich der Wärmeübergang von den Abgaskühlerrohren zum Kühlmittel, wodurch die gewünschte Temperaturerhöhung der Abgaskühlerrohre und somit der Oberflächentemperatur des Wärmetauschers, insbesondere des Abgaswärmetauschers, erreicht wird.

Erhöht sich die Kühlmitteltemperatur des Motorkühlkreislaufs MK auf eine Temperatur von vorliegend über 50°C, so wird der Zulaufquerschnitt für den Motorkühlkreislauf MK langsam geöffnet. Dies erfolgt vorliegend durch die Ausdehnung des Dehnstoffs, der sich über einen Arbeitskolben an einem Widerlager abstützt und somit den Steuerkolben S verschiebt. Die volle Öffnung des Zulaufquerschnitts vom Motorkühlkreislauf MK wird vorliegend bei 55°C erreicht.

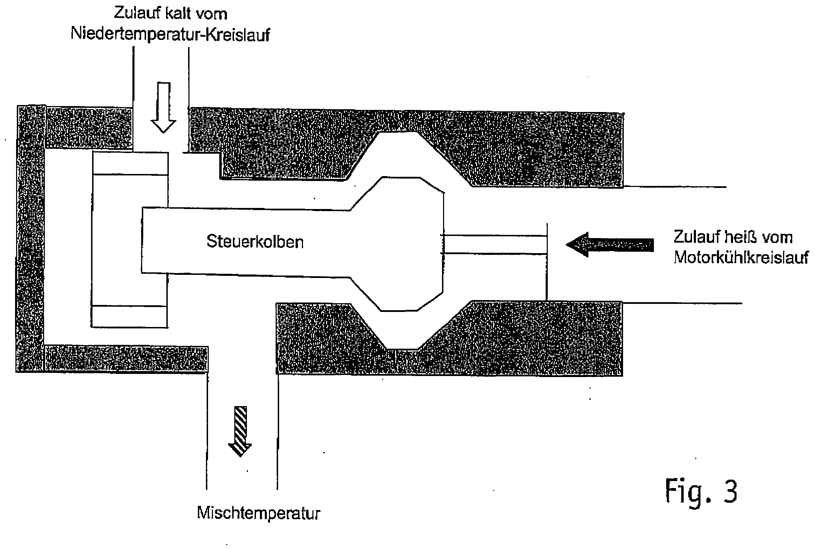

Steigt die Temperatur des Motorkühlmittels weiter an, so öffnet auch der Schieber SS des Steuerkolbens S den Zulaufquerschnitt für den Niedertemperatur-Kühlkreislauf NK, wie in Fig. 3 dargestellt, wodurch sich eine Mischtemperatur von vorliegend ca. 60°C ergibt, mit welcher das Kühlmittel, das sowohl vom Motorkühlkreislauf MK als auch vom Niedertemperatur-Kühlkreislauf NK stammt, dem zweiten Wärmetauscher, insbesondere dem zweiten Abgaswärmetauscher, AGK2 zugeführt wird.

Erfolgt ein weiterer Temperaturanstieg, so schließt der Steuerkolben S langsam den Zulaufquerschnitt für den Motorkühlkreislauf MK, wobei - je nach Ausgestaltung des Ventils TNK - ein vollständiges Verschließen oder ein Verschließen mit Restleckage möglich ist. Sinkt die Temperatur wieder, so schrumpft das Dehnstoffelement und der Steuerkolben S bewegt sich entsprechend der sich einstellenden Temperatur wieder zurück.

Durch diese Regelung wird die maximale Kühlleistung im zweiten Wärmetauscher, insbesondere im zweiten Abgaswärmetauscher, AGK2 bewirkt, wobei gleichzeitig eine Unterschreitung der Taupunkttemperatur sicher vermieden werden kann.

Die Regelung der Gesamtkühlmittelmenge, die durch den zweiten Wärmetauscher, insbesondere im zweiten Abgaswärmetauscher, AGK2 strömt, erfolgt mit Hilfe des zweiten Ventils VNK, das nach dem zweiten Wärmetauscher, insbesondere nach dem zweiten Abgaswärmetauscher, AGK2 angeordnet ist.

Da auf diese Weise Kühlmittel aus dem Motorkühlkreislauf MK in den Niedertemperatur-Kühlkreialauf NK gelangt, muss auch eine Rückführung von Kühlmittel in den Motorkühlkreislauf MK vorgesehen sein. Hierfür ist ein Abzweig nach der Zusammenführung von Kühlmittel, das durch den zweiten Wärmetauscher, insbesondere durch den zweiten Abgaswärmetauscher, AGK2 geströmt ist, und Kühlmittel, das durch den Ladeluftkühler LLK geströmt ist, vorgesehen. Der Abzweig führt zu einem Kühlmittelausgleichsbehälter K, in welchem das Kühlmittel gesammelt wird und bei Bedarf, d.h. bei zu geringem Druck, vor der Pumpe PMK dem Motorkühlkreislauf MK wieder zugeführt werden kann.

Nicht in der Zeichnung dargestellt ist ein im Abgasstrom nach der Turbine T und vor dem Abzweig der Abgasrückführung angeordneter Diesel-Partikelfilter. Der Partikelfilter bewirkt, dass neben dem Kondensat möglichst keine Partikel, insbesondere keine größeren Partikel, abgeschieden werden, welche sich ablagern und dadurch den Wartungsaufwand erhöhen. Jedoch können insbesondere kleine Partikel als Kondensationskeime dienen und sich positiv auf die vorliegend unerwünschte Kondensation auswirken, so dass es hilfreich ist, wenn möglichst alle Partikel abgeschieden werden.

Entsprechende, temperaturgeregelte Kühlmittelkreisläufe können auch zur Kühlung von Wärmetauschern, insbesondere zur Kühlung von Abgaswärmetauchern, AGK vorgesehen sein, die bei einer Hochdruck-Abgasrückführung, wie in Fig. 6 schematisch dargestellt, verwendet werden, um die Wärmetauscher, insbesondere Abgaswärmetauscher, AGK und die nachfolgenden Bauteile vor Korrosion zu schützen. Hierbei ist bei der Hochdruckabgasrückführung gegebenenfalls eine Drossel erforderlich.

Trotz der Maßnahmen kann es bei besonders extremen Betriebsbedingungen, insbesondere bei sehr geringen Außentemperaturen, zu Temperaturen unter dem Taupunkt im Wärmetauscher, insbesondere im Abgaswärmetauscher, kommen, so dass eine Vermeidung von Kondensat nicht immer gewährleistet ist. In diesem Fall kann zum Schutz des Verdichters nach dem Wärmetauscher, insbesondere nach dem Abgaswärmetauscher, ein oder mehrere Kondensatabscheider vorgesehen sein. Bei dem oder den Kondensatabscheidem, die ggf. vorgesehen sein können, kann es sich um Kondensatabscheider beliebiger Art handeln, bspw. Fliehkraftabscheider. Neben einem Kondensatabscheider kann auch eine Kondensatentsorgung vorgesehen sein, welche bspw. thermisch die im Kondensat enthaltenen Giftstoffe in ungefährliche Stoffe umwandelt, die an die Umgebung abgegeben werden können.

Gemäß einer Variante des Ausführungsbeispiels, die nicht in der Zeichnung dargestellt ist, erfolgt eine Regelung in Abhängigkeit der tatsächlichen Taupunkttemperatur des rückgeführten Abgases. Hierfür wird die Temperatur des zu kühlenden Mediums, insbesondere die Abgastemperatur, der Druck sowie die Feuchtigkeit des zu kühlenden Mediums, insbesondere des Abgases, regelmäßig überprüft. Anhand eines vorgegebenen Kennfeldes wird die optimale bei den gegebenen Rahmenbedingungen, d.h. der Temperatur des Kühlmittels im Motorkühlkreislauf und im Niedertemperatur-Kühlkreislauf, erreichbare Kühlmitteltemperatur ermittelt entsprechend das Thermostat-Ventil, bspw. mittels eines elektrisch betätigten Aktuators, eingestellt.

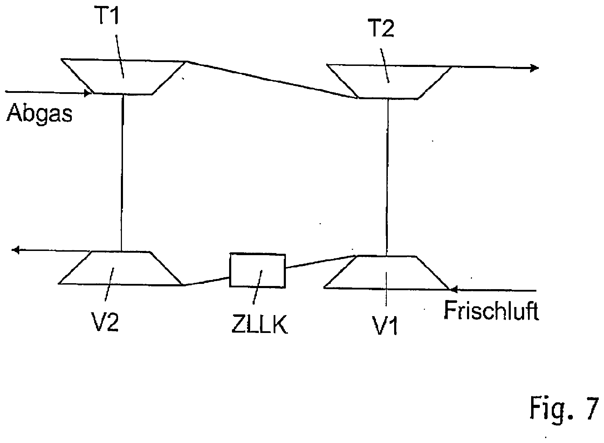

In Fig. 7 ist eine zweistufige Aufladung von Ladeluft gemäß dem zweiten Ausführungsbeispiel dargestellt, wobei nach der ersten Verdichterstufe (Verdichter V1) ein Ladeluft-Zwischenkühler ZLLK angeordnet ist, um die Temperatur der Ladeluft vor dem Eintritt in die zweite Verdichterstufe (Verdichter V2) abzusenken. Die beiden Verdichter V1 und V2 sind mit Turbinen T1 und T2, durch welche das vom Motor kommende Abgas geleitet wird, gekoppelt, um Energie zu sparen. In der Darstellung von Fig. 7 ist der nachfolgend des zweiten Verdichters V2 angeordnete Ladeluftkühler nicht dargestellt.

Die Regelung des Ladeluft-Zwischenkühlers ZLLK erfolgt, um einen Tropfenschlag im zweiten Verdichter V2 zu verhindern, taupunktgeregelt. Das heißt, die Ladeluft-Austrittstemperatur aus dem Ladeluft-Zwischenkühler ZLLK muss oberhalb der Taupunkttemperatur der Ladeluft im entsprechenden Austrittszustand liegen. Um dies sicherzustellen, wird die Temperatur des Kältemittels, welches den Ladeluft-Zwischenkühler ZLLK durchströmt derart geregelt, dass Kältemitteleintrittstemperaturen, d.h. der Kältemitteltemperatur am Eintritt in den Ladeluft-Zwischenkühler ZLLK, von vorliegend unter 60°C ausgeschlossen werden.

Die Regelung der Kältemitteltemperatur auf minimal 60°C erfolgt mit Hilfe einer entsprechenden Mischung des Kältemittels vom Motorkühlkreislauf und vom Niedertemperaturkreislauf. Die Regelung kann entsprechend der zuvor beschriebenen Temperaturregelung des Kältemittels erfolgen.

Gemäß einer Variante der zweistufigen Aufladung der Ladeluft mit einem Ladeluft-Zwischenkühler erfolgt die Zwischenkühlung der Ladeluft mit Hilfe der Umgebungsluft, d.h. der Ladeluft-Zwischenkühler ist luftgekühlt. In diesem Fall erfolgt die Temperaturregelung der Ladeluft-Eintrittstemperatur in den zweiten Verdichter V2 mit Hilfe eines Bypasses, d.h. je nach Bedarf wird die vom ersten Verdichter V1 kommende Luft durch den Ladeluft-Zwischenkühler ZLLK oder durch den Bypass geführt, so dass sich nach der Zusammenführung der beiden Luftströme eine mittlere Temperatur ergibt, die eine Tropfenbildung am oder im zweiten Verdichter V2 sicher verhindert, Vorliegend erfolgt die Regelung der Temperatur derart, dass sich bei normalen Betriebszuständen eine mittlere Temperatur von minimal 55°C am Eintritt in den zweiten Verdichter V2 ergibt.

## Patentansprüche

1. Wärmetauschersystem mit einem über einen Motorkühlkreislauf (MK) gekühlten Verbrennungsmotor (M), dem rückgeführtes Abgas als ein Medium zugeführt werden kann, wobei das Wärmetauschersystem mindestens einen Abgaswärmetauscher als Wärmetauscher zur Kühlung des Mediums mittels eines Kühlmittels aufweist, wobei das Wärmetauschersystem mindestens einen Temperaturregler zur Regelung der Temperatur des dem Wärmetauscher zugeführten Kühlmittels aufweist, der die Kühlmitteleintrittstemperatur in den Wärmetauscher nach unten auf eine Temperatur oberhalb des Taupunkts des gekühlten Mediums begrenzt, wobei der Wärmetauscher (AGK2; ZLLK) Teil eines Niedertemperatur-Kühlkreislaufs (NK) ist und der Temperaturregler ein Ventil aufweist, wobei das Ventil (TNK) im Normalbetrieb den Zufluss von heißem Motorkühlmittel verhindert, so dass ausschließlich oder nahezu ausschließlich warmes Kühlmittel vom Niedertemperatur-Kühlkreislauf (NK) durch den Wärmetauscher (AGK2; ZLLK) strömt, und welches bei kaltem Motor den Zufluss von kaltem Kühlmittel aus dem Motorkühlkreislauf (MK) und kaltem Kühlmittel aus dem Niedertemperatur-Kühlkreislauf (NK) verhindert, so dass kein oder nahezu kein Kühlmittel durch den Wärmetauscher (AGK2; ZLLK) strömt, und welches bei warmem Kühlmittel im Motorkühlkreislauf (MK) und kaltem Kühlmittel im Niedertemperatur-Kühlkreislauf (NK) öffnet, so dass warmes Kühlmittel aus dem Motorkühlkreislauf (MK) dem kalten Kühlmittel im Niedertemperatur-Kühlkreislauf (NK) beigemischt wird, bevor es durch den Wärmetauscher (AGK2; ZLLK) strömt.

2. Wärmetauschersystem nach Anspruch 1, **dadurch gekennzeichnet, dass** der Temperaturregler die Kühlmitteleintrittstemperatur in den Wärmetauscher auf minimal 50°C begrenzt.

3. Wärmetauschersystem nach Anspruch 1 oder 2, **dadurch gekennzeichnet, dass** der Niedertemperatur-Kühlkreislauf (NK), in welchem der Wärmetauscher (AGK2; ZLLK) angeordnet ist, und der Motorkühlkreislauf (MK) miteinander verbindbar ausgebildet sind.

4. Wärmetauschersystem nach einem der vorhergehenden Ansprüche, **dadurch gekennzeichnet, dass** der Temperaturregler in den Wärmetauscher (AGK2; ZLLK) integriert ist.

5. Wärmetauschersystem nach einem der vorhergehenden Ansprüche, **dadurch gekennzeichnet, dass** das Wärmetauschersystem mindestens ein Ventil (TNK) mit einem Dehnstoffelement aufweist, wobei das Ventil in einer Endstellung einen ersten Strömungskanal vollständig freigibt und einen zweiten Strömungskanal verschließt und in der zweiten Endstellung den ersten Strömungskanal verschließt und den zweiten Strömungskanal vollständig freigibt, wobei bei den geschlossenen Strömungskanälen jeweils Restleckagen bis maximal 30% des Gesamtdurchflusses möglich sind.

6. Wärmetauschersystem nach einem der vorhergehenden Ansprüche, **dadurch gekennzeichnet, dass** ein Kühlmittelausgleichsbehälter (K) zwischen Niedertemperatur-Kühlkreislauf (NK) und Motorkühlkreislauf (MK) vorgesehen ist.

7. Wärmetauschersystem nach einem der vorhergehenden Ansprüche, **dadurch gekennzeichnet, dass** die Rückführung des gekühlten Mediums, als die Abgasrückführung, zwei Wärmetauscher (AGK1 und AGK2) als zwei Abgaswärmetauscher aufweist, wobei der erste Wärmetauscher (AGK1) als der erste Abgaswärmetauscher im Motorkühlkreislauf (MK) und der zweite Wärmetauscher (AGK2) als der zweite Abgaswärmetauscher im Niedertemperatur-Kühlkreislauf (NK) angeordnet ist, und der zweite Wärmetauscher (AGK2) als der zweite Abgaswärmetauscher in einzelnen Betriebszuständen auch von Kühlmittel aus dem Motorkühlkreislauf (MK) durchströmt werden kann.

8. Wärmetauschersystem nach einem der vorhergehenden Ansprüche, **dadurch gekennzeichnet, dass** das Wärmetauschersystem eine Abgasrückführung in Form einer Niederdruck-Abgasrückführung vorsieht.

9. Wärmetauschersystem nach einem der vorhergehenden Ansprüche, **dadurch gekennzeichnet, dass** das Wärmetauschersystem eine mindestens zweistufige Ladeluftverdichtung mit mindestens einem Ladeluft-Zwischenkühler (ZLLK) vorsieht.

## Claims

1. A heat exchanger system with an internal combustion engine (M) cooled via an engine cooling circuit (MK) to which recirculated exhaust gas can be supplied as a medium, wherein the heat exchanger system has at least one exhaust gas heat exchanger as a heat exchanger for cooling the medium by means of a coolant, wherein the heat exchanger system has at least one temperature controller for controlling the temperature of the coolant supplied to the heat exchanger which limits the minimum coolant inlet temperature into the heat exchanger to a temperature above the dew point of the cooled medium, wherein the heat exchanger (AGK2; ZLLK) is part of a low-temperature cooling circuit (NK) and the temperature controller has a valve, wherein the valve (TNK) prevents the inflow of hot engine coolant during normal operation, so that exclusively or nearly exclusively warm coolant flows from the low-temperature cooling circuit (NK) through the heat exchanger (AGK2; ZLLK) and which prevents the inflow of cold coolant from the engine cooling circuit (MK) and cold coolant from the low-temperature cooling circuit (NK) when the engine is cold, so that no or nearly no coolant flows through the heat exchanger (AGK2; ZLLK) and which opens when the coolant in the engine cooling circuit (MK) is warm and the coolant in the low-temperature cooling circuit (NK) is cold, so that warm coolant from the engine cooling circuit (MK) is mixed with the cold coolant in the low-temperature cooling circuit (NK) before it flows through the heat exchanger (AGK2; ZLLK).

2. The heat exchanger system according to claim 1, **characterised in that** the temperature controller limits the coolant inlet temperature into the heat exchanger to a minimum of 50°C.

3. The heat exchanger system according to claim 1 or 2, **characterised in that** the low-temperature cooling circuit (NK) in which the heat exchanger (AGK2; ZLLK) is arranged and the engine cooling circuit (MK) are formed such that they can be connected to one another.

4. The heat exchanger system according to one of the preceding claims, **characterised in that** the temperature controller is integrated in the heat exchanger (AGK2; ZLLK).

5. The heat exchanger system according to one of the preceding claims, **characterised in that** the heat exchanger system has at least one valve (TNK) with an expansion element, wherein the valve fully releases a first flow channel and closes a second flow channel in an end position and closes the first flow channel and fully releases the second flow channel in the second end position, wherein with regard to the closed flow channels, a respective residual leakage up to 30% maximum of the total flow is possible.

6. The heat exchanger system according to one of the preceding claims, **characterised in that** a coolant compensation tank (K) is provided between the low-temperature cooling circuit (NK) and the engine cooling circuit (MK).

7. The heat exchanger system according to one of the preceding claims, **characterised in that** the recirculation of the cooled medium has, as the exhaust gas recirculation, two heat exchangers (AGK1 and AGK2) as two exhaust gas heat exchangers, wherein the first heat exchanger (AGK1) as the first exhaust gas heat exchanger is arranged in the engine cooling circuit (MK) and the second heat exchanger (AGK2) as the second exhaust gas heat exchanger is arranged in the low-temperature cooling circuit (NK) and the second heat exchanger (AGK2) as the second exhaust gas heat exchanger can, in separate operating conditions, also be flowed through by coolant from the engine cooling circuit (MK).

8. The heat exchanger system according to one of the preceding claims, **characterised in that** the heat exchanger system provides an exhaust gas recirculation in the form of a low-pressure exhaust gas recirculation.

9. The heat exchanger system according to one of the preceding claims, **characterised in that** the heat exchanger system provides a charge air sealing which has at least two steps and at least one charge air intercooler (ZLLK).

## Revendications

1. Système d'échangeurs de chaleur comprenant un moteur à combustion interne (M) refroidi par un circuit de refroidissement du moteur (MK), moteur à combustion interne auquel peuvent être fournis, comme milieu, des gaz d'échappement recyclés, où le système d'échangeurs de chaleur présente au moins un échangeur de chaleur de gaz d'échappement fonctionnant comme un échangeur de chaleur servant au refroidissement du milieu, au moyen d'un liquide de refroidissement, où le système d'échangeurs de chaleur présente au moins un régulateur de température servant à la régulation de la température du liquide de refroidissement fourni à l'échangeur de chaleur, lequel régulateur de température limite, vers le bas, la température d'entrée du liquide de refroidissement dans l'échangeur de chaleur, à une température supérieure au point de rosée du milieu refroidi, où l'échangeur de chaleur (AGK2 ; ZLLK) fait partie d'un circuit de refroidissement à basse température (NK), et le régulateur de température présente une soupape, où la soupape (TNK) empêche, au cours du fonctionnement normal, l'afflux de liquide de refroidissement très chaud provenant du moteur, de sorte que du liquide de refroidissement chaud, provenant exclusivement ou presque exclusivement du circuit de refroidissement à basse température (NK), circule à travers l'échangeur de chaleur (AGK2 ; ZLLK), soupape qui, quand le moteur est froid, empêche également l'afflux de liquide de refroidissement froid provenant du circuit de refroidissement du moteur (MK), et empêche l'afflux de liquide de refroidissement froid provenant du circuit de refroidissement à basse température (NK), de sorte qu'aucun ou presque aucun liquide de refroidissement ne circule à travers l'échangeur de chaleur (AGK2 ; ZLLK), soupape qui s'ouvre quand le liquide de refroidissement est chaud dans le circuit de refroidissement du moteur (MK) et quand le liquide de refroidissement est froid dans le liquide de refroidissement à basse température (NK), de sorte que du liquide de refroidissement chaud provenant du circuit de refroidissement du moteur (MK) est mélangé avec le liquide de refroidissement froid provenant du circuit de refroidissement à basse température (NK), avant que ledit liquide de refroidissement circule à travers l'échangeur de chaleur (AGK2 ; ZLLK).

2. Système d'échangeurs de chaleur selon la revendication 1, **caractérisé en ce que** le régulateur de température limite la température d'entrée du liquide de refroidissement dans l'échangeur de chaleur, au minimum à 50°C.

3. Système d'échangeurs de chaleur selon la revendication 1 ou 2, **caractérisé en ce que** le circuit de refroidissement à basse température (NK), dans lequel est disposé l'échangeur de chaleur (AGK2 ; ZLLK), et le circuit de refroidissement du moteur (MK), sont conçus en pouvant être réunis l'un à l'autre.

4. Système d'échangeurs de chaleur selon l'une quelconque des revendications précédentes, **caractérisé en ce que** le régulateur de température est intégré dans l'échangeur de chaleur (AGK2 ; ZLLK).

5. Système d'échangeurs de chaleur selon l'une quelconque des revendications précédentes, **caractérisé en ce que** le système d'échangeurs de chaleur présente au moins une soupape (TNK) comportant un élément en matériau dilatable, où la soupape, dans une position de fin de course, libère complètement un premier conduit d'écoulement et ferme un deuxième conduit d'écoulement et, dans la deuxième position de fin de course, ferme le premier conduit d'écoulement et libère complètement le deuxième conduit d'écoulement où, quand les conduits d'écoulement sont fermés, des fuites résiduelles sont à chaque fois possibles, atteignant jusqu'à 30 % au maximum du débit total.

6. Système d'échangeurs de chaleur selon l'une quelconque des revendications précédentes, **caractérisé en ce qu'**il est prévu un vase d'expansion de liquide de refroidissement (K) placé entre le circuit de refroidissement à basse température (NK) et le circuit de refroidissement du moteur (MK).

7. Système d'échangeurs de chaleur selon l'une quelconque des revendications précédentes, **caractérisé en ce que** le recyclage du milieu refroidi, comme étant le recyclage des gaz d'échappement, présente deux échangeurs de chaleur (AGK1 et AGK2) fonctionnant comme deux échangeurs de chaleur de gaz d'échappement, où le premier échangeur de chaleur (AGK1) est disposé, dans le circuit de refroidissement du moteur (MK), comme étant le premier échangeur de chaleur de gaz d'échappement, et le deuxième échangeur de chaleur (AGK2) est disposé, dans le circuit de refroidissement à basse température (NK), comme étant le deuxième échangeur de chaleur de gaz d'échappement, et le deuxième échangeur de chaleur (AGK2) fonctionnant comme le deuxième échangeur de chaleur de gaz d'échappement peut, dans différents états de fonctionnement, être traversé également par du liquide de refroidissement provenant du circuit de refroidissement du moteur (MK).

8. Système d'échangeurs de chaleur selon l'une quelconque des revendications précédentes, **caractérisé en ce que** le système d'échangeurs de chaleur prévoit un recyclage des gaz d'échappement sous la forme d'un recyclage des gaz d'échappement effectué à basse pression.

9. Système d'échangeurs de chaleur selon l'une quelconque des revendications précédentes, **caractérisé en ce que** le système d'échangeurs de chaleur prévoit une compression de l'air de suralimentation se produisant au moins sur deux étages et comprenant au moins un refroidisseur intermédiaire d'air de suralimentation (ZLLK).
